# EUROPÄISCHE PATENTSCHRIFT

(11) **EP 0 688 350 B1**
(45) Veröffentlichungstag und Bekanntmachung des Hinweises auf die Patenterteilung: **01.09.1999**
(21) Anmeldenummer: 94908882.7
(22) Anmeldetag: 08.03.1994
(51) Int. Cl.: C09D 201/00, C09D 7/12

(54) **OFENTROCKNENDE, NACH NEUTRALISATION MIT BASEN WASSERVERDÜNNBARE LACKE**
ENAMELS WATER-DILUTABLE AFTER NEUTRALISATION WITH BASES
EMAUX AU FOUR, DILUABLES A L'EAU APRES NEUTRALISATION AVEC DES BASES

(30) Priorität: 09.03.1993 DE 4307423
(43) Veröffentlichungstag der Anmeldung: 27.12.1995
(73) Patentinhaber: Vianova Resins Aktiengesellschaft, 8402 Werndorf (AT)
(72) Erfinder: WILFINGER, Werner, A-8042 Graz (AT); KRIESSMANN, Ingo, A-8010 Graz (AT); HERRMANN, Friedrich, D-42117 Wuppertal (DE); BÖHME, Angelika, D-51379 Leverkusen (DE)
(74) Vertreter: Zounek, Nikolai, Dipl.-Ing.
(86) Internationale Anmeldenummer: AT9400024
(87) Internationale Veröffentlichungsnummer: WO9420582

(56) Entgegenhaltungen:
- FR-A- 2 208 953
- US-A- 4 469 841

## Beschreibung

Die Erfindung betrifft ofentrocknende, nach Neutralisation mit Basen wasserverdünnbare Lacke auf der Basis von Kombinationen polyhydroxylfunktioneller, nach Neutralisation mit Basen wasserverdünnbarer Polymerisationsharze und/oder Polykondensationsharze und/oder Polyadditionsharze und/oder Emulsionscopolymerisate mit zumindest partiell mit Monoalkoholen veretherten Aminoharzen, welche als Vernetzungskatalysatoren Umsetzungsprodukte von starken organischen oder anorganischen Säuren mit Mono- und/oder Diepoxidverbindungen und/oder Lactonen enthalten.

Die Vernetzungsreaktion von ofentrocknenden Lacken, die polyhydroxylfunktionelle Bindemittel in Kombination mit Aminoharzen aufweisen, wird in der Praxis vielfach durch starke Säuren katalysiert, wobei diese gegebenenfalls in einer blockierten Anwendungsform vorliegen.

Für wasserverdünnbare Lacke, die durch Neutralisation mit Basen in ihre wasserlösliche Form übergeführt werden, kommen beinahe ausschließlich ionisch blockierte Säuren, meist in Form der Ammonium- oder quaternären Aminsalze, zur Anwendung.

FR-A-2208953 betrifft wasserverdünnbare, kathodisch abscheidbare Lacke auf der Basis von Bindemittelkombinationen, die Ester von aromatischen Mono- oder Polysulfonsäuren oder von aromatischen Mono- oder Dicarbonsäuren als latente Härter enthalten. Auf diese Weise kann man die Härte der Filme und die Beständigkeit gegenüber Chemikalien verbessern.

In den Lacken auf Basis von organischen Lösemitteln werden nichtionisch blockierte Säuren als Vernetzungskatalysatoren vor allem für elektrostatisch verspritzbare Lacke empfohlen, weil die allgemein bevorzugten ionisch blockierten oder freien Säuren wegen ihrer hohen Leitfähigkeit nicht eingesetzt werden können.

Es wurde nun überraschenderweise gefunden, daß trotz ihrer Unlöslichkeit in Wasser nichtionisch blockierte Säuren auch als Vernetzungskatalysatoren in nach Neutralisation mit Basen wasserverdünnbaren Lacken eingesetzt und durch diese Maßnahme wesentliche technische Vorteile erreicht werden können.

Die Erfindung betrifft demgemäß ofentrocknende, nach Neutralisation mit Basen wasserverdünnbare Lacke auf der Basis von Kombinationen polyhydroylfunktioneller, nach Neutralisation mit Basen wasserverdünnbarer Polymerisationsharze und/oder Polykondensationsharze und/oder Polyadditionsharze und/oder Emulsionscopolymerisate mit zumindest partiell mit Monoalkoholen veretherten Aminoharzen, welche dadurch gekennzeichnet sind, daß sie als Vernetzungskatalysatoren Umsetzungsprodukte von starken organischen oder anorganischen Säuren mit Mono- und/oder Diepoxidverbindungen und/oder Lactonen enthalten.

Während bei der Verwendung von ionisch blockierten Katalysatoren in wasserverdünnbaren Lacken unter den in der Praxis vorgegebenen Einbrennbedingungen in vielen Fällen eine Runzelbildung an der Filmoberfläche beobachtet werden kann, tritt diese Störung bei den erfindungsgemäß beschriebenen Lacken nicht auf. Überdies zeigen die eingebrannten Lackfilme eine Verbesserung der Beständigkeit gegen saure Agentien ("Saurer Regen").

Die für die Formulierung der Lacke geeigneten polyhydroxylfunktionellen, nach Neutralisation mit Basen wasserverdünnbaren Polymerisationsharze, Polykondensationsharze, Polyadditionsharze und Emulsionscopolymerisate sowie die geläufigen Modifikationen dieser Harze, sind in der Literatur in großer Zahl beschrieben und somit dem Fachmann bekannt.

Ebenso bekannt als Vernetzungskomponenten sind Aminoharze, wobei für die erfindungsgemäßen Lacke Aminoharze mit einem hohen Veretherungsgrad, besonders HMMM (Hexamethoxymethylmelamin)-Typen, bevorzugt werden.

Als nichtionisch blockierte Säuren werden Umsetzungsprodukte der Toluol-4-sulfonsäure, der Dinonylnaphthalinsulfonsäure, der Methylphosphonsäure, der Phenylphosphonsäure und der ortho-Phosphorsäure mit Monoepoxidverbindungen, Diepoxidverbindungen und Lactonen verwendet. Gegebenenfalls können auch Mischungen der Ausgangsprodukte bzw. der nichtionisch blockierten Säuren eingesetzt werden. Die erfindungsgemäß eingesetzten nichtionisch blokkierten Säuren sind entweder Handelsprodukte oder können in relativ einfacher Weise hergestellt werden.

Die thermisch nicht stabilen Esterbindungen der Vernetzungskatalysatoren spalten sich erst bei Temperaturen, bei denen das im Bindemittel vorhandene Neutralisationsmittel bereits zu einem wesentlichen Teil aus dem Film entwichen ist.

Die folgenden Beispiele erläutern die Erfindung, ohne sie in ihrem Umfang einzuschränken. Alle Angaben in Teilen oder Prozenten beziehen sich, sofern nichts anderes angegeben ist, auf Gewichtseinheiten. Der Ausdruck "H⁺ latent" soll darauf hinweisen, daß die Säure erst nach der thermischen Spaltung wirksam wird.
(A) Herstellung bzw. Definition der Katalysatoren
   (A1) In einem geeigneten Reaktionsgefäß werden unter Rühren 380 Tle Toluol-4-sulfonsäure-Monohydrat (2 Mol) bei 50°C in 120 Tlen Ethanol (techn.) gelöst. Danach werden 372 Tle Ethylhexylglycidylether (2 Mol) kontinuierlich zugegeben, wobei die Temperatur der Reaktionsmasse 60°C nicht überschreiten soll. Anschließend wird die Temperatur auf 80°C gesteigert und so lange gehalten, bis die Säurezahl auf unter 10 mg KOH/g gefallen ist. Gegebenenfalls muß der Ansatz mit entsprechenden Anteilen Ethylhexylglycidylether korrigiert werden. Das nach Abziehen des Lösemittels im Vakuum resultierende Öl weist einen Gehalt von 0,27 Mol H⁺ latent/100 g auf.
   (A2) In gleicher Weise wie bei (A1) beschrieben, werden 95 Tle eines Diepoxidharzes auf Basis von Bisphenol A (Epoxidäquivalentgewicht 190) auf 60°C erwärmt und bei dieser Temperatur kontinuierlich mit einer Lösung von 76 Tlen p-Toluolsulfonsäure-Monohydrat (0,4 Mol) in 76 Tlen Ethanol (techn.) versetzt. Die Veresterung wird bei 60°C bis zu einer Säurezahl von unter 10 mg KOH/g geführt. Das nach Abziehen des Lösemittels resultierende Produkt weist einen Gehalt von 0,23 Mol H⁺ latent/100 g auf.
   (A3) In gleicher Weise wie bei (A1) beschrieben, werden 38,4 Tle (0,33 Mol) Orthophosphorsäure (85 %ig in H₂O) bei 40°C mit 250 Tlen (1 Mol) Versaticsäure-glycidylester (CARDURA E 10, Fa. SHELL) versetzt und bei 60°C bis zu einer Säurezahl von unter 10 mg KOH/g verestert. Das Produkt weist einen Gehalt von 0,35 Mol H⁺ latent/100 g auf.
   (A4) In gleicher Weise wie bei (A1) beschrieben, werden 460 Tle (1 Mol) Dinonylnaphthalinsulfonsäure in einer Lösung von 480 Tlen Methylethylketon bei 70°C mit 114 Tlen (1 Mol) 6-Caprolacton reagiert. Das Produkt weist einen Gehalt von 0,09 Mol H⁺ latent/100 g auf.
   (A5) Handelsüblicher, nichtionogen blockierter Säurekatalysator auf Basis von Toluol-4-sulfonsäure, 50%ig in Xylol (KATALYSATOR 1203, HÜLS AG, DE)
   (A6) Handelsüblicher, nichtionischer Katalysator auf Basis einer epoxidblockierten Dinonylnaphthalinsulfonsäure, 42%ig in Xylol/MIBK (1 : 1). (NACURE® 1419, King Industries Inc., USA)
   (A7V) Vergleichsprodukt: ionisch blockierte Toluol-4-sulfonsäure, hergestellt aus 190 Tlen Toluol -4-sulfonsäure-Monohydrat (1 Mol), 89 Tlen (1 Mol) Dimethylethanolamin und 101 Tlen Wasser. Das Produkt weist einen Gehalt von 0,26 Mol H⁺ latent/100 g auf.
(B) Herstellung bzw. Definition der polyhydroxylfunktionellen Lackbindemittel
   (B1) Reaktionsprodukt aus
      (B1a) einem Acrylatcopolymeren, hergestellt durch Copolymerisation von 20 Tlen Methacrylsäure, 33 Tlen Butylacrylat, 35 Tlen Styrol und 12 Tlen Ethylhexylacrylat in Gegenwart von 3 Tlen Azobisisovaleronitril (ABVN) und 103 Tlen Isopropanol.
         Feststoffgehalt: 50 Gew.-%
         Säurezahl: ca. 150 mg KOH/g
         Viskosität: ca. 280 mPa.s/20°C
      und
   (B1b) einem Acrylatcopolymeren, hergestellt durch Copolymerisation von 18 Tlen Ethylacrylat, 32 Tlen Methylmethacrylat, 30 Tlen Hydroxyethylmethacrylat und 20 Tlen Ethlyhexylacrylat in Gegenwart von 3 Tlen ABVN und 55, 5 Tlen Isopropanol.
      Feststoffgehalt: ca. 65 Gew.-%
      Hydroxylzahl: ca. 130 mg KOH/g
      Viskosität: ca. 1140 mPa.s/20°C.

      50 Tle der Komponente (B1a) werden mit 116 Tlen der Komponente (B1b) gemischt und unter Vakuum vom Lösemittel befreit. Die Mischung weist einen Feststoffgehalt von 96 Gew.-% und eine Grenzviskositätszahl von 11,3 ml/g (CHCl₃, 20°C) auf. Die Komponenten werden bei 125°C während ca. 4 Stunden partiell kondensiert, wobei die Grenzviskositätszahl auf 13,9 ml/g steigt.
      Anschließend werden 5,0 Tle Dimethylethanolamin und 25 Tle Vernetzer C1 (siehe später) zugegeben. Nach Kühlung auf 90°C, Zugabe von 2,5 Tlen Katalysator (A1) und Verdünnen mit deionisiertem Wasser auf einen Festkörpergehalt von 47 Gew.-% erhält man eine Emulsion mit einem pH-Wert von 8,6 und einer Viskosität von 1700 mPa.s/20°C.
      Die zugesetzte Katalysatormenge entspricht einem Gehalt von 0,0053 Mol H⁺ latent/100 g Feststoff des gesamten Lackbindemittels.
   (B2) Handelsübliche, anionisch stabilisierte, mit Dimethylethanolamin vorneutralisierte Acrylatharzdispersion, 50%ig in Wasser (RESYDROL® SW 383, VIANOVA, AT).
   (B3) Handelsübliches, wasserverdünnbares Acrylatharz, 70%ig in Diethylenglycolmonobutylether, als Kombinationspartner für (B2) (RESYDROL® SW 484, VIANOVA, AT).
   (B4) Handelsübliches, wasserverdünnbares Acrylatharz, 70%ig (RESYDROL® VWY 03, VIANOVA, AT).
   (B5) Handelsüblicher, wasserverdünnbarer ölfreier Polyester, urethangruppenhältig, 35%ig in Wasser (RESYDROL® VWA 5490, VIANOVA, AT).
   (B6) Handelsübliches, wasserverdünnbares Alkydharz, fettsäuremodifiziert, urethangruppenhältig, 40 % in Wasser (RESYDROL® VWA 5478, VIANOVA, AT).
   (B7) Handelsübliches, wasserverdünnbares ölfreies Alkydharz, 75%ig in Ethylenglykolmonobutylether (RESYDROL® VWA 5188, VIANOVA, AT).
   (B8) Entspricht dem Harz (B1), jedoch ohne Vernetzer, Feststoffgehalt 45 %.
(C) Definition der Aminoharze
   (C1) Handelsübliches Hexamethoxymethylmelamin, 100%ig (MAPRENAL® MF 904, HOECHST, DE)
   (C2) Handelsübliches hochreaktives Melamin-Formaldehydharz, 80%ig in n-Butanol (MAPRENAL® VMF 3615, HOECHST, DE)

### Beispiele 1 - 12

Entsprechend den Angaben in Tabelle 1 wurden Lacke hergestellt:

Die Klarlacke (Beispiele 1 - 5) wurden nach Mischen der angegebenen Komponenten mit Dimethylethanolamin auf einen pH-Wert von 7,8 - 8,6 eingestellt und für die Spritzapplikation mit Wasser auf eine Viskosität von 23 bis 28 Sek. (DIN 53211/23°C) verdünnt.

Die Lacke gemäß den Beispielen 6, 7, 8 und 10 - 12 wurden in üblicher Weise auf einer Perlmühle angerieben, mit Dimethylethanolamin auf einen pH-Wert von 7,5 bis 8,7 eingestellt und für die Spritzapplikation mit Wasser auf die Spritzviskosität von 23 bis 30 Sekunden (DIN 53211/ 23°C) verdünnt.

Für den Lack gemäß dem Beispiel 9 wurde die Alupaste in Wasser/Ethylenglykolmonobutylether vordispergiert und langsam der vorverdünnten Klarlacklösung zugemischt. Nach gründlicher Durchmischung (60 bis 90 Minuten) wurde der Lack mit Dimethylethanolamin auf einen pH-Wert von 7,5 bis 8,0 eingestellt und für die Spritzapplikation mit Wasser auf die Spritzviskosität von 20 bis 23 Sek. (DIN 53211/23°C) verdünnt.

### Erklärungen zur Tabelle 1

(1) Vergleichsbeispiele
(2) Aluminiumpigmentpaste AQUAVEX® 504 AR-107 P von SILBERLINE, GB (non-leafing, mittelfeines 400 mesh Aluminiumpigment in Polypropylenglykol und Additiven)
(3) Acrylatcopolymer VISCALEX® HV 30 von ALLIED COLLOIDS, GB
(4) Flüssiger UV-Absorber CGL-384 von CIBA-GEIGY, CH
(5) TINUVIN® 123 von CIBA-GEIGY, CH
(6) ADDITOL® XW 329 von VIANOVA, AT (7) bereits im Harz (B1) enthalten

### Applikation und Prüfung der Lacke:

Spritzauftrag mit folgenden Trockenfilmschichtstärken:

| | |
|---|---|
| Klarlacke | ca. 35 µm |
| Decklacke | ca. 35 µm |
| Basislacke | ca. 15 µm |
| Grundierungen | ca. 40 µm |
| Füller | ca. 35 µm |

Für die Prüfung der Runzelbildung wurden die Lacke mit steigenden Trockenfilm-Schichtstärken (ab ca. 10 µm) appliziert.

Die Einbrennbedingungen und die Prüfergebnisse sind in der Tabelle 2 beschrieben.

### Erklärungen zur Tabelle 2

(1) Filmstärke in µm, bei welcher im Decklack die Runzelbildung beginnt.
(2) nach DIN 53157, 23°C bei 35 µm Filmstärke
(3) Optische Beurteilung:
   0 keine Gilbung
   1 geringe Gilbung
   2 deutliche Gilbung
(4) 30%ige H₂SO₄ bei 25°C, Fleckenbildung nach 16 Stunden
   K keine Einwirkung
   L leichte Einwirkung
   D deutliche Einwirkung
(5) Vergleichsbeispiele

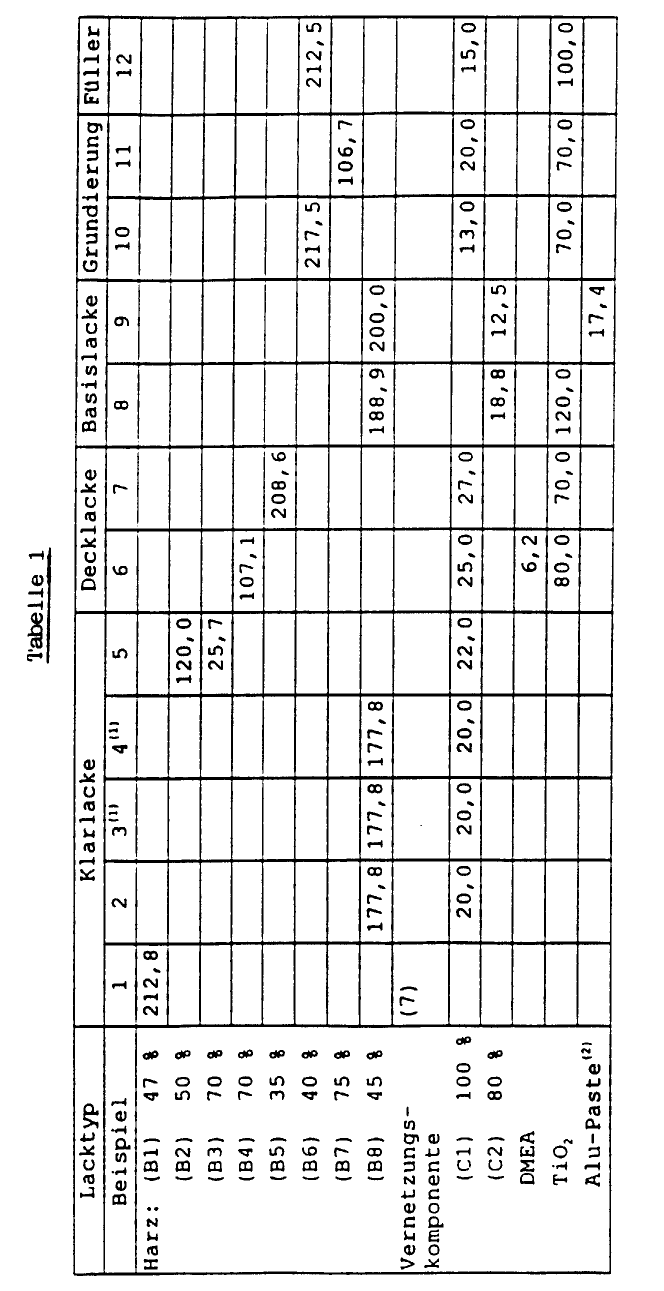

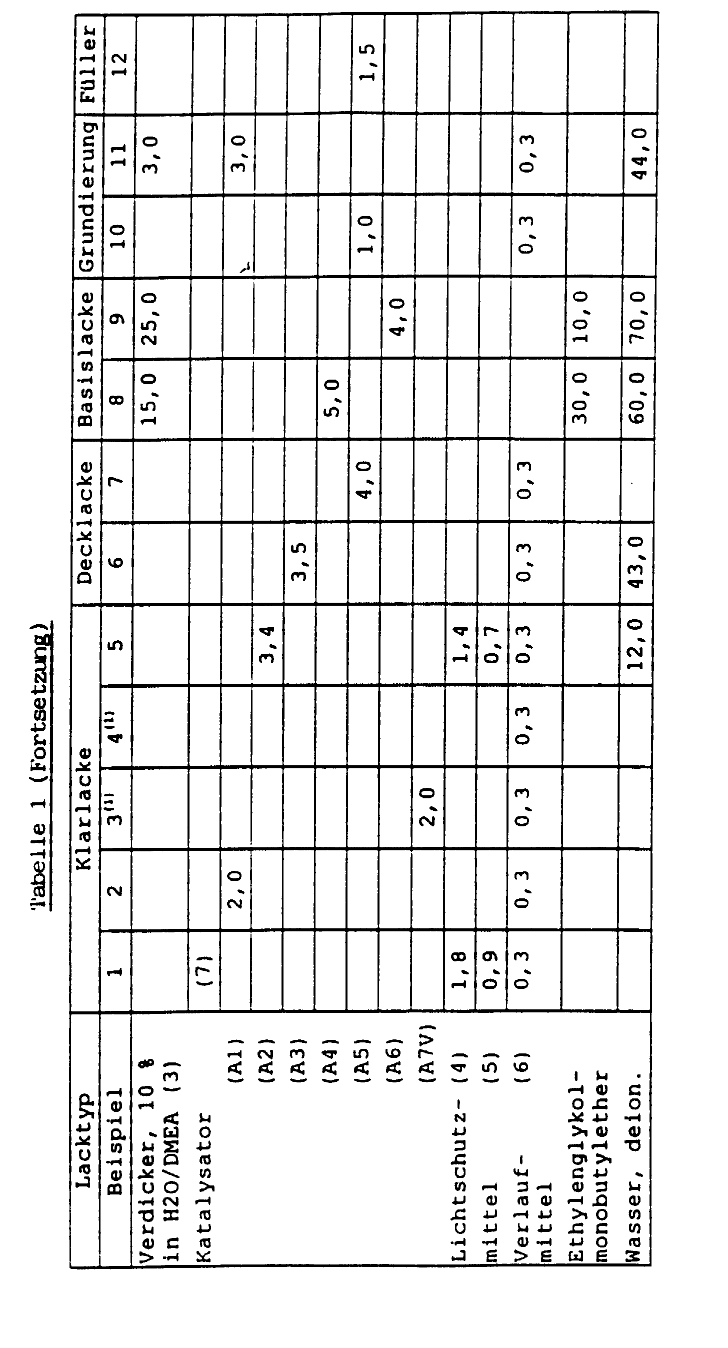

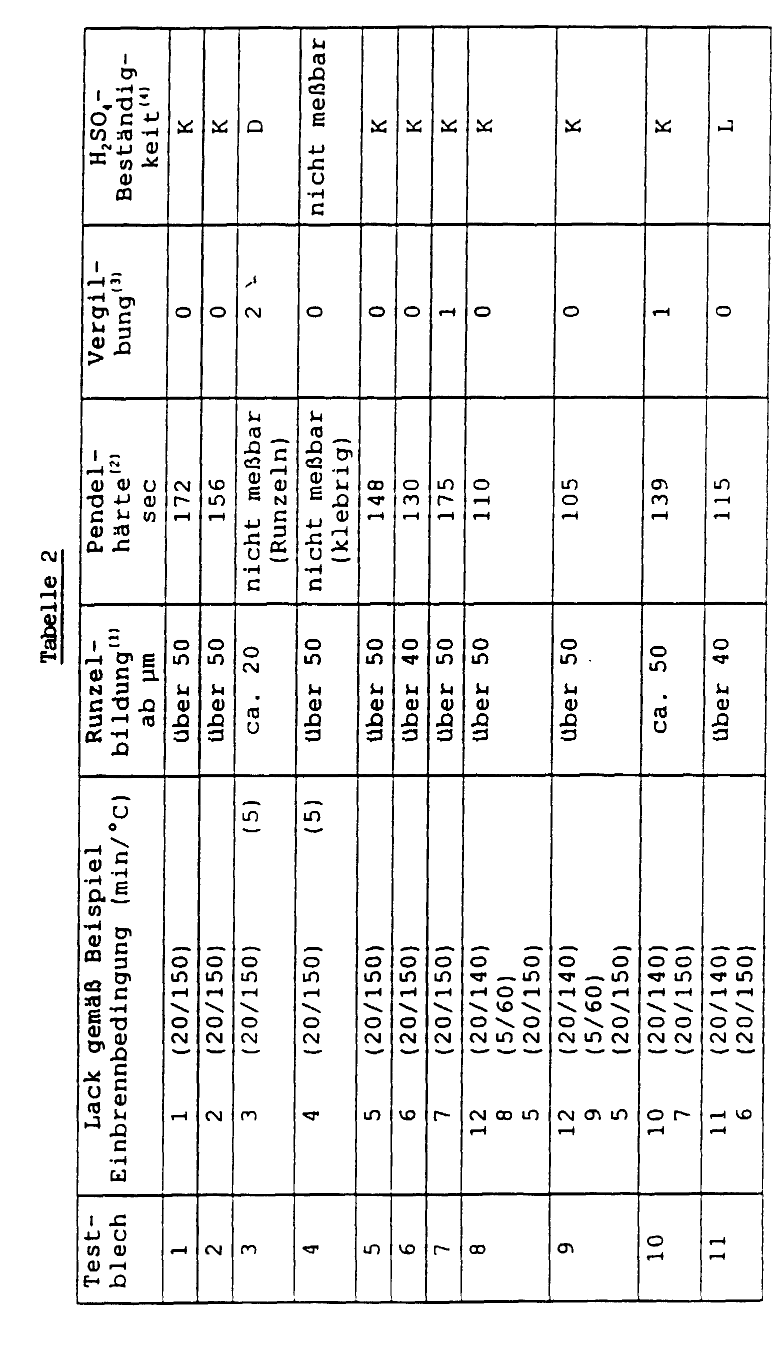

## Patentansprüche

1. Ofentrocknende, nach Neutralisation mit Basen wasserverdünnbare Lacke auf der Basis von Kombinationen polyhydroxylfunktioneller, nach Neutralisation mit Basen wasserverdünnbarer Polymerisationsharze und/oder Polykondensationsharze und/oder Polyadditionsharze und/oder Emulsionscopolymerisate mit zumindest partiell mit Monoalkoholen veretherten Aminoharzen, dadurch gekennzeichnet, daß sie Vernetzungskatalysatoren ausgewählt aus den Umsetzungsprodukten von Verbindungen ausgewählt aus Monoepoxidverbindungen, Diepoxidverbindungen und Lactonen, und Säuren ausgewählt aus Toluol-4-Sulfonsäure, Dinonylnaphthalinsulfonsäure, Methylphosphonsäure, Phenylphosphonsäure und ortho-Phosphorsäure enthalten.

2. Lacke gemäß Anspruch 1, dadurch gekennzeichnet, daß sie als Vernetzungskatalysatoren Umsetzungsprodukte der Toluol-4-sulfonsäure und/oder der Dinonylnaphthalinsulfonsäure und/ oder der Methylphosphonsäure und/oder der Phenylphosphonsäure und/oder der ortho-Phosphorsäure mit Mono- und/oder Diglycidylverbindungen enthalten.

## Claims

1. Oven-drying coating materials which are water-dilutable after neutralization with bases and are based on combinations of polyhydroxyl-functional addition polymerization resins and/or polycondensation resins and/or polyaddition resins and/or emulsion copolymers which are water-dilutable after neutralization with bases, with amino resins which are at least partially etherified with monoalcohols, characterized in that the coating materials contain crosslinking catalysts selected from the reaction products of compounds selected from monoepoxide compounds, diepoxide compounds and lactones, and acids selected from toluene-4-sulphonic acid, dinonylnaphthalenesulphonic acid, methylphosphonic acid, phenylphosphonic acid and ortho-phosphoric acid.

2. Coating materials according to Claim 1, characterized in that they contain as crosslinking catalysts reaction products of toluene-4-sulphonic acid and/or dinonylnaphthalenesulphonic acid and/or methylphosphonic acid and/or phenylphosphonic acid and/or ortho-phosphoric acid with mono- and/or diglycidyl compounds.

## Revendications

1. Emaux au four diluables à l'eau après neutralisation avec des bases à base de combinaisons de résines de polymérisation et/ou de résines de polycondensation et/ou de résines de polyaddition et/ou de copolymères en émulsion polyhydroxylés diluables à l'eau après neutralisation avec des bases, avec des résines aminées au moins partiellement éthérifiées avec des monoalcools, caractérisés en ce qu'ils contiennent des catalyseurs de réticulation choisis parmi des produits de réaction de composés choisis parmi des composés monoépoxydiques, des composés diépoxydiques et des lactones, et d'acides choisis parmi l'acide toluène-4-sulfonique, l'acide dinonylnaphtalènesulfonique, l'acide méthylphosphonique, l'acide phénylphosphonique et l'acide orthophosphorique.

2. Peintures selon la revendication 1, caractérisées en ce qu'elles contiennent en tant que catalyseurs de réticulation des produits de réaction de l'acide toluène-4-sulfonique et/ou de l'acide dinonylnaphtalènesulfonique et/ou de l'acide méthylphosphonique et/ou de l'acide phénylphosphonique et/ou de l'acide orthophosphonique avec des composés mono- et/ou diglycidiques.
